# EUROPÄISCHE PATENTSCHRIFT

(11) **EP 2 671 657 B1**
(45) Veröffentlichungstag und Bekanntmachung des Hinweises auf die Patenterteilung: **25.05.2016**
(21) Anmeldenummer: 12004284.1
(22) Anmeldetag: 05.06.2012
(51) Int. Cl.: B23D 33/02, B23D 15/00

(54) **Trennvorrichtung und Verfahren zum Betrieb einer Trennvorrichtung**
Separating device and method for operating same
Dispositif de séparation et procédé destiné au fonctionnement d'un dispositif de séparation

(43) Veröffentlichungstag der Anmeldung: 11.12.2013
(73) Patentinhaber: Schmidt und Remmert GmbH, 59590 Geseke (DE)
(72) Erfinder: Schmidt, Helmut, 33154 Salzkotten (DE)
(74) Vertreter: Gesthuysen, Michael

(56) Entgegenhaltungen:
- FR-A2- 2 562 825
- US-A- 4 294 147

## Beschreibung

Die Erfindung betrifft ein Verfahren zum Betrieb einer Trennvorrichtung zum Trennen eines Werkstücks, mit einem Trennzyklus umfassend mindestens folgende Verfahrensschritte: Schließen einer Haltevorrichtung zum Halten des zu trennenden Werkstücks, Trennen des Werkstücks durch Verfahren eines Trennmessers aus einer Ausgangsposition durch den Querschnitt des Werkstücks in eine Trennposition. Des Weiteren betrifft die Erfindung eine Trennvorrichtung zum Trennen eines Werkstücks, umfassend eine Haltevorrichtung für ein Werkstück und ein Trennmesser, wobei das Trennmesser mindestens zwischen einer Ausgangsposition und einer Trennposition verfahrbar ist. Ein solches Verfahren und eine solche Vorrichtung sind aus der US 5,383,381 bekannt.

Trennvorrichtungen und Verfahren zum Betrieb von Trennvorrichtungen sind im Stand der Technik seit langem in einer Vielzahl von Ausgestaltungen bekannt. Derartige Trennvorrichtungen werden zum spanlosen und gratfreien Trennen von länglichen Werkstücken, insbesondere Rohren, aus Stahl und anderen Metallen eingesetzt. Sowohl in der Einzel- als auch in der Massenfertigung sind Trennvorrichtungen in unterschiedlichsten Industriesparten wesentlicher Bestandteil der Produktion. Das Trennen eines Werkstücks mit einem Trennmesser hat gegenüber anderen Trennverfahren einen Geschwindigkeitsvorteil, so dass die Bearbeitungszeit reduziert ist. Dadurch, dass das Werkstück mit einem Trennmesser abgetrennt wird, entsteht ferner kein Grat an der Schnittfläche, wodurch eine aufwendige Nachbearbeitung der Schnittflächen entbehrlich ist und eine Weiterverarbeitung unmittelbar nach dem Trennvorgang erfolgen kann. Neben der Realisierbarkeit von engen Toleranzen wird des Weiteren der Materialverlust durch die Verwendung von Trennmessern reduziert. Das Schließen der Haltevorrichtung erfolgt derart, dass das Werkstück spielfrei in der Haltevorrichtung gehalten ist.

Aus dem Stand der Technik ist des Weiteren bekannt, das zu trennende Werkstück - insbesondere Rohre - vor dem eigentlichen Trennschnitt mit dem Trennmesser mit wenigstens einem Kerbmesser mit einer Kerbe zu versehen, so dass das Trennmesser einfacher in dass Material eindringen kann, ohne dabei eine Verformung der Kontur des Werkstücks, insbesondere bei Hohlprofilen, zu verursachen.

Die US 5,383,381 offenbart beispielsweise eine Trennvorrichtung gemäß dem Oberbegriff des Anspruchs 8 zum Trennen von länglichen Werkstücken. Während der Abwärtsbewegung eines Trennmessers wird das Werkstück zunächst von einer Haltevorrichtung eingeklemmt und anschließend mit einem Kerbmesser eingekerbt, bevor das Trennmesser das Werkstück abtrennt. Nach dem Trennen des Werkstücks erfolgt eine Aufwärtsbewegung des Trennmessers und eine Rückstellbewegung des Kerbmessers, wobei abschließend das Werkstück aus der Haltevorrichtung freigegeben wird.

Die aus dem Stand der Technik bekannten Trennvorrichtungen weisen den Nachteil auf, dass sie einem erhöhten Verschleiß unterliegen, wodurch die Standzeiten reduziert sind.

Ausgehend von dem vorgenannten Stand der Technik liegt der Erfindung die Aufgabe zugrunde, ein Verfahren zum Betrieb einer Trennvorrichtung, das die Standzeit der Trennvorrichtung erhöht, und eine Trennvorrichtung anzugeben, bei der die Standzeit erhöht ist.

Die erfindungsgemäße Aufgabe ist bei einem gattungsgemäßen Verfahren dadurch gelöst, dass ein zumindest teilweises Öffnen der Haltevorrichtung erfolgt, während sich das Trennmesser zumindest teilweise im Querschnitt des Werkstücks befindet. Das zu trennende Werkstück, vorzugsweise ein Rohr, wird zunächst in die Trennvorrichtung eingebracht, wobei als erster Verfahrensschritt ein Schließen einer Haltevorrichtung zum Halten des zu trennenden Werkstücks erfolgt. Die Haltevorrichtung umfasst vorzugsweise mindestens eine erste und eine zweite Haltebacke, die das Werkstück von zwei Seiten derart umschließen, dass es unmittelbar an der Haltevorrichtung durch das Trennmesser abgeschert werden kann. Dabei ist beispielsweise die zweite Haltebacke statisch angeordnet, während die erste Haltebacke zum Halten des Werkstücks auf die erste Haltebacke zu und von dieser weg bewegbar ist.

Nachdem das Werkstück in der Haltevorrichtung gehalten ist, erfolgt das Trennen des Werkstücks indem ein Trennmesser aus einer Ausgangsposition durch den Querschnitt des Werkstücks in eine Trennposition verfahren wird. Das Trennmesser weist dazu Schneidkanten auf, die beim Eintauchen des Trennmessers in den Querschnitt des Werkstücks das Material des Werkstücks abscheren, wodurch ein Trennen des Werkstücks erfolgt. Das Trennmesser wird beim Trennen durch den gesamten Querschnitt des Werkstücks verfahren, so dass ein vollständiges Abtrennen eines Teils des Werkstücks erfolgt. Nachdem das Werkstück abgetrennt ist, befindet sich das Trennmesser in der Trennposition, nämlich in der Position, in der das Trennmesser den gesamten Querschnitt des Werkstücks vollständig durchtreten hat.

Die Ausgangsposition des Trennmesser befindet sich relativ zum eingespannten Werkstück gegenüberliegend zur Trennposition. In der Ausgangsposition hat das Trennmesser keinerlei Kontakt zum Werkstück. Während des Trennvorgangs wird das Trennmesser in einer translatorischen Bewegung von der Ausgangsposition in die Trennposition bewegt, wobei die Schneidkanten des Trennmessers das Werkstück abscheren. Dabei erfolgt ein Abscheren des Werkstücks in einem beliebigen Winkel, in dem das Werkstück in die Haltevorrichtung eingespannt ist, vorzugsweise erfolgt das Trennen des Werkstücks in einem rechten Winkel.

Um die Standzeit der Trennvorrichtung zu erhöhen, ist gemäß dem vorliegenden Verfahren vorgesehen, dass die Haltevorrichtung zumindest teilweise geöffnet wird, während sich das Trennmesser zumindest teilweise im Querschnitt des Werkstücks befindet. Das zumindest teilweise Öffnen der Haltevorrichtung bedeutet dabei, dass die Haltevorrichtung vorzugsweise nicht vollständig geöffnet wird - wie es beispielsweise bei der Entnahme des Werkstücks erfolgt -, sondern nur soweit, dass das Werkstück nicht mehr unter Spannung gehalten ist. Die Haltevorrichtung wird dazu vorzugsweise teilweise geöffnet, so dass das Werkstück mit Spiel in der Haltevorrichtung gehalten ist, so dass das Rückstellen des Trennmessers vorteilhaft mit einem Abstand zum Werkstück erfolgt. Durch das Öffnen der Haltevorrichtung wird der Kontakt des Trennmessers mit dem Werkstück während des Rückstellens verringert, wodurch ein Verschleiß des Trennmessers reduziert wird und sich die Standzeit der Trennvorrichtung erhöht.

Dass die Haltevorrichtung geöffnet wird, während sich das Trennmesser zumindest teilweise innerhalb des Querschnitts des Werkstücks befindet, bedeutet, dass die Haltevorrichtung geöffnet wird, wenn sich das Trennmesser zumindest teilweise noch in dem Bereich des Werkstücks - also an einem Ort - befindet, in dem es während des Trennvorgangs das Material des Werkstücks abgeschert hat. Ein Öffnen der Haltevorrichtung erfolgt beispielsweise dann, wenn das Trennmesser bereits soweit zurückgestellt worden ist, dass es nur noch lediglich die Hälfte des Querschnitts des Werkstücks abdeckt. Auch dadurch wird der Verschleiß reduziert.

Der Erfindung liegt folglich die Idee zugrunde, den Verschleiß des Trennmessers dadurch zu reduzieren, dass der Kontakt des Trennmessers und des Werkstücks bei einer rückwärtigen Bewegung des Trennmessers in die Ausgangsposition reduziert wird. Je früher nach dem Trennen folglich ein Öffnen der Haltervorrichtung erfolgt, desto größer ist die Verschleißreduzierung am Trennmesser. Das Verfahren weist ferner des Vorteil auf, dass es an bestehenden Trennvorrichtungen nachrüstbar ist, indem diese derart konfiguriert werden, dass ein zumindest teilweises Öffnen der Haltevorrichtung erfolgt, während das Trennmesser noch im Bereich des Querschnitts des zu trennenden Werkstücks ist. Dies kann beispielsweise dadurch erfolgen, dass bei einer hydraulischen oder pneumatischen Betätigung der Haltevorrichtung, die Betätigung der Haltevorrichtung entsprechend angesteuert wird.

Der Verschleiß des Trennmessers wird vorteilhaft reduziert, wenn gemäß einer ersten Ausgestaltung vorgesehen ist, dass das zumindest teilweise Öffnen der Haltevorrichtung bevor oder während des Rückstellens des Trennmessers aus der Trennposition in die Ausgangsposition erfolgt. Eine größtmögliche Reduzierung des Verschleißes wird realisiert, wenn ein teilweises Öffnen der Haltevorrichtung erfolgt, bevor das Trennmesser aus der Trennposition in die Ausgangsposition zurückgestellt wird bzw. wenn ein Öffnen gleichzeitig mit dem Beginn der Rückstellbewegung erfolgt. Dadurch, dass das Werkstück während der gesamten rückwärtigen Bewegung des Trennmessers aus der Trennposition in die Ausgangsposition lediglich mit geringfügigem Spiel in der Haltevorrichtung gehalten wird, wird der Verschleiß des Trennmessers reduziert.

Es ist jedoch auch vorgesehen, dass das teilweise Öffnen der Haltevorrichtung erst während des Rückstellvorgangs des Trennmessers aus der Trennposition in die Ausgangsposition erfolgt, beispielsweise derart, dass die Haltevorrichtung teilweise geöffnet wird, wenn das Trennmesser bereits teilweise aus dem Querschnitt des Werkstücks zurückgezogen ist. Dadurch lässt sich der Verschleiß des Trennmessers maßgeblich reduzieren, jedoch in einem reduzierten Umfang im Vergleich zu einer Öffnung der Haltevorrichtung vor dem Rückstellen des Trennmessers.

Während das Werkstück mit dem Trennmesser abgeschert wird, entstehen durch die Scherkräfte innerhalb des Werkstücks zwischen dem Werkstück und der Haltevorrichtung Spannungen, die stets auch auf das Trennmesser wirken. Würde nun das Trennmesser ohne eine Freigabe des Werkstücks durch teilweises Öffnen der Haltevorrichtung in seine Ausgangsposition zurückgeführt, erfolgte während des Rückstellens ein Schleifkontakt zwischen Trennmesser und Werkstück, der einen Verschleiß des Trennmessers verursachte.

Gemäß einer weiteren Ausgestaltung des Verfahrens hat sich als vorteilhaft herausgestellt, wenn vorgesehen ist, dass nach dem Schließen der Haltevorrichtung und vor dem Trennen des Werkstücks ein Kerben des Werkstücks mit einem Kerbmesser erfolgt, indem das Kerbmesser aus einer Ausgangsposition in eine Kerbposition verfahren wird. Bei diesem Verfahren des Kerbmesser erzeugt das Kerbmesser im Querschnitt des Werkstücks - bei einem Rohr in der Rohrwand - einen sekantenartig verlaufenden Schlitz bzw. eine Kerbe, durch die nachfolgend das Trennmesser in den Querschnitt des Werkstücks eindringen kann. Die Kerbe ermöglicht ein einfaches Eindringen des Trennmessers in den Querschnitt des Werkstücks und verhindert eine Gradbildung bzw. Fehlstellen und Beschädigungen an dem abgetrennten Werkstück, so dass eine Nachbearbeitung der Schnittkanten nicht erforderlich ist.

Das Kerbmesser befindet sich in seiner Ausgangsposition vorzugsweise auf einer Seite des Querschnitts des Werkstücks und wird zur Erzeugung der Kerbe derart an dem Werkstück vorbeigeführt, dass eine Kerbe mit einer Tiefe entsteht, die dem Versatz des Kerbmessers in Richtung der Mittelachse des Werkstücks entspricht. Das Kerbmesser weist vorzugsweise eine Mehrzahl an Zähnen auf, die die Oberfläche des Werkstücks auftrennen. Vorzugsweise wird das Kerbmesser zum Kerben an dem Werkstück vorbeigezogen, so dass nachfolgend das Trennmesser - ohne mit dem Kerbmesser zu kollidieren - in das Werkstück eindringen kann. Nach dem Kerben des Werkstücks erfolgt unmittelbar das Trennen des Werkstücks mit den vorangehend beschriebenen Verfahrensschritten.

Der Verschleiß des Kerbmessers wird gemäß einer weiteren Ausgestaltung vorteilhaft dadurch reduziert, dass ein Rückstellen des Kerbmessers aus der Kerbposition in die Ausgangsposition erst nach dem Trennen des Werkstücks erfolgt. Vorzugsweise erfolgt das Rückstellen des Kerbmessers erst nachdem die Haltevorrichtung zumindest teilweise geöffnet wurde, so dass auch das Kerbmesser an dem nunmehr mit Spiel gehaltenen Werkstück vorbeigeführt werden kann, wodurch der Verschleiß des Kerbmessers reduziert wird. Das Kerbmesser wird folglich unmittelbar vor dem Trennen an dem Werkstück vorbeigeführt, wodurch das Werkstück eingekerbt wird. Eine Rückstellung des Kerbmessers erfolgt erst nachdem der Trennvorgang abgeschlossen ist, da das Rückstellen des Kerbmessers auch ein erneutes - rückwärtiges - Vorbeiführen des Kerbmessers am nunmehr abgetrennten Querschnitt des Werkstücks erfordert.

Neben einem reduzierten Verschleiß der Trennvorrichtung hat ein Verfahren gemäß einer nächsten Ausgestaltung den Vorteil, dass die Zeit eines Trennzyklus reduziert wird, indem vorgesehen ist, dass das Rückstellen des Trennmessers und das Rückstellen des Kerbmessers zumindest teilweise zeitgleich erfolgt. Dazu ist vorgesehen, dass sobald das Trennmesser während des Rückstellens von dem Werkstück weggeführt ist, das Kerbmesser das Werkstück auf seinem Rückstellweg passieren kann, bevor das Werkstück bzw. ein weiterer Teil des Werkstücks zum weiteren Abtrennen erneut in der Haltevorrichtung befestigt wird. Dadurch, dass das Kerbmesser vorzugsweise an dem Werkstück vorbeigezogen wird, kann das Kerbmesser nur bei abgetrenntem Werkstück bzw. ohne gehaltertes Werkstück in seine Ausgangsposition zurück verfahren werden. Durch das zumindest teilweise zeitgleiche Rückstellen des Trennmessers und des Kerbmessers in die jeweilige Ausgangsposition wird die Zeit für einen Trennzyklus nennenswert reduziert.

Zum Einbringen eines neuen Werkstücks oder zum Neupositionieren des Werkstücks zum erneuten Abtrennen ist gemäß einer nächsten Ausgestaltung vorgesehen, dass ein vollständiges Öffnen der Haltevorrichtung erfolgt, nachdem das Trennmesser den Querschnitt des Werkstücks verlassen hat, insbesondere nachdem mindestens das Trennmesser wieder in der Ausgangsposition ist. Das Repositionieren des Werkstücks bzw. das Einlegen eines neuen Werkstücks erfolgt folglich stets bei vollständig geöffneter Haltevorrichtung, so dass das Rückstellen des Trennmessers stets bei zwar mit Spiel bewegbarem, aber immer noch in der Haltevorrichtung gehaltenem Werkstück erfolgt.

Das vollständige Öffnen der Haltevorrichtung erfolgt erst nachdem das Trennmesser den Querschnitt des Werkstücks verlassen hat, so dass sichergestellt ist, dass die Bewegung des Trennmessers das Werkstück nicht mehr aus der Haltevorrichtung herausstoßen kann. Wenn das Trennmesser den Querschnitt des Werkstücks während der Rückstellbewegung aus der Trennposition in die Ausgangsposition verlassen hat, hat das Trennmesser keinerlei Kontaktmöglichkeit mehr zum Werkstück, so dass die Haltevorrichtung gefahrlos vollständig geöffnet werden kann. Vorzugsweise wird die Haltevorrichtung erst vollständig geöffnet, wenn das Trennmesser wieder in seiner Ausgangsposition angelangt ist.

Das teilweise Öffnen der Haltevorrichtung nach dem Trennen dient primär dem Abbau der Spannungen, die durch das Halten des Werkstücks in der Haltevorrichtung entstehen und der Vergrößerung des Abstandes zwischen dem Werkstück und dem Trennmesser, so dass gemäß einer weiteren Ausgestaltung vorgesehen ist, dass das zumindest teilweise Öffnen der Haltevorrichtung derart erfolgt, dass ein Spalt mit einer Breite zwischen 0,5 mm und 2,5 mm zwischen Werkstück und Haltevorrichtung entsteht, insbesondere ein Spalt mit einer Breite von 1 mm. Ein Öffnen der Haltevorrichtung in einem derartigen Umfang führt zum Abbau der durch die Haltevorrichtung erzeugten Spannungen und gewährleistet und verschleißfreies Rückstellen des Trennmessers. Zur Erzeugung des Spaltes wird beispielsweise eine Haltebacke der Haltevorrichtung angehoben bzw. bewegt, so dass das Werkstück in einer Haltebacke liegt, während die andere Haltebacke mit einem Abstand zwischen 0,5 mm und 2,5 mm zu dem Werkstück beabstandet ist. Durch ein derartiges Spiel zwischen Haltevorrichtung und Werkstück ist der Abbau von Spannungen gewährleistet, wobei das Werkstück gleichzeitig weiterhin von der Haltevorrichtung in Position gehalten wird, ohne dass eine Verschiebung der Position des Werkstücks in größerem Umfang erfolgen kann.

Die eingangs genannte Aufgabe ist ferner bei einer Trennvorrichtung gemäß dem Oberbegriff des Anspruchs 8 zum Trennen eines Werkstücks dadurch gelöst, dass die Trennvorrichtung derart eingerichtet ist, dass das vorangehend beschriebene Verfahren und die im Rahmen der Ausgestaltungen beschriebenen Varianten des Verfahrens durchführbar sind.

Zur Durchführung des Verfahrens ist die Trennvorrichtung beispielsweise derart ausgestaltet, dass die Bewegungen der Haltevorrichtung und des Trennmessers über eine drehbar gelagerte Exzenterscheibe synchronisiert sind. Die Exzenterscheibe wird beispielsweise durch einen Elektromotor in eine Drehbewegung versetzt, wobei die Haltevorrichtung und das Trennmesser derart mit der Exzenterscheibe verbunden sind, dass eine Bewegung des Trennmessers aus der Ausgangsposition in die Trennposition, insbesondere ein Kontakt des Trennmessers mit dem Werkstück, erst dann erfolgt, wenn die Haltevorrichtung vollständig geschlossen und das Werkstück gehalten ist. Die Exzenterscheibe steuert folglich das Zusammenwirken der Bewegung des Trennmessers und der Öffen- und Schließbewegung der Haltevorrichtung, so dass die Bewegungen durch eine Ausgestaltung der Exzenterscheibe exakt aufeinander abstimmbar sind.

Alternativ dazu ist auch vorgesehen, dass eine Synchronisierung der Bewegungen der Haltevorrichtung und des Trennmessers über ein elektronisches Steuergerät realisiert ist, das derart eingerichtet ist, dass es die Bewegung der Komponenten auf die gemäß dem Verfahren gewünschte Art und Weise ansteuert.

Gemäß einer ersten Ausgestaltung der Trennvorrichtung ist vorgesehen, dass ein Kerbmesser vorhanden ist, dass das Kerbmesser zwischen einer Ausgangsposition und einer Kerbposition verfahrbar ist, insbesondere dass die Bewegung des Kerbmessers über die Exzenterscheibe mit der Bewegung der Haltevorrichtung und des Trennmessers synchronisiert ist. Das Trennmesser dient dem Kerben des Werkstücks, wobei über die Kerbe nachfolgend das Trennmesser in den Querschnitt des Werkstücks eintreten kann. Dadurch, dass die Exzenterscheibe vorzugsweise die Bewegung der Haltevorrichtung, des Trennmessers und des Kerbmessers synchronisiert sind die Bewegungen exakt aufeinander abstimmbar, so dass einerseits eine hohe Präzision in der Bearbeitung erzielt werden kann, andererseits die Bearbeitungszeit reduziert werden kann, indem die Bewegungen exakt mit minimalem Zeitabstand aufeinander abgestimmt sind.

Dabei steuert die Exzenterscheibe zunächst ein Schließen der Haltevorrichtung, wobei unmittelbar nach dem Schließen der Haltevorrichtung das Kerbmesser durch das Werkstück geführt wird, so dass unmittelbar nachdem das Kerbmesser das Werkstück verlassen hat, das Trennmesser in den Querschnitt des Werkstücks zum Trennen des Werkstücks eindringen kann. Die Bewegungen der Messer und der Haltevorrichtung sind exakt aufeinander abgestimmt, wodurch ein sehr kurzer Trennzyklus mit einer Länge von etwa einer Sekunde möglich ist. Ein Trennzyklus umfasst dabei das Schließen der Haltevorrichtung, so dass das Werkstück gehalten ist, bis zur vollständigen Freigabe des Werkstücks.

Gemäß einer weiteren Ausgestaltung der Trennvorrichtung ist die Exzenterscheibe derart ausgebildet, dass das Kerbmesser in die Ausgangsposition zurückgefahren wird, nachdem das Trennmesser in der Ausgangsposition ist. Vorzugsweise kreuzen sich die Bewegungsrichtungen des Trennmessers und des Kerbmessers orthogonal, so dass eine Kollision des Trennmessers mit dem Kerbmesser verhindert wird, wenn das Trennmesser erst zurückgefahren wird, nachdem das Trennmesser in seiner Ausgangsposition ist.

Die Trennvorrichtung wird weiterhin vorteilhaft dadurch ausgestaltet, dass die Exzenterscheibe derart ausgebildet ist, dass ein zumindest teilweises Öffnen der Haltevorrichtung erfolgt, während das Trennmesser im Bereich des Querschnitts des Werkstücks ist. Die Exzenterscheibe steuert sowohl die Bewegung des Trennmessers als auch die Bewegung der Haltevorrichtung, so dass durch die Form der Exzenterscheibe bzw. die Befestigung der Steuerstäbe der Haltevorrichtung und die Befestigung der Steuerstäbe des Trennmessers die Zeitpunkte einstellbar sind, wann bzw. in welcher Position des Trennmessers die Haltevorrichtung öffnet. Die Haltevorrichtung öffnet vorzugsweise kurz bevor oder exakt an dem Zeitpunkt an dem das Trennmesser seine Rückstellbewegung aus der Trennposition in die Ausgangsposition beginnt, so dass während des gesamten Rückstellvorgangs des Trennmessers das Werkstück mit Spiel in der Haltevorrichtung gehalten ist. Besonders vorteilhaft ist gemäß einer weiteren Ausgestaltung, dass die Exzenterscheibe derart ausgebildet ist, dass ein zumindest teilweises Öffnen der Haltevorrichtung bevor oder während des Rückstellens des Trennmessers aus der Trennposition in die Ausgangsposition erfolgt.

Zur Steuerung der Bewegung der Haltevorrichtung ist gemäß einer weiteren Ausgestaltung vorteilhaft vorgesehen, dass die Bewegung der Haltevorrichtung durch die Form der Außenkontur in der Exzenterscheibe gesteuert wird. Das Öffnen und Schließen der Haltevorrichtung bzw. das teilweise Öffnen und Schließen der Haltevorrichtung wird beispielsweise über einen Steuerstab bestimmt, der in Kontakt mit der Außenkontur der sich drehenden Steuerscheibe ist. Durch die Form der Außenkontur wird die Bewegung des Steuerstabes und damit unmittelbar die Bewegung der Haltevorrichtung bestimmt, so dass die Außenkontur der Exzenterscheibe derart eingestellt ist, dass die Haltevorrichtung zu den gewünschten Zeitpunkten bzw. zu den gewünschten Positionen des Trennmessers teilweise oder vollständig geöffnet wird.

Ein vollständiges Öffnen der Haltevorrichtung erfolgt gemäß einer letzten Ausgestaltung der Trennvorrichtung dadurch, dass die Exzenterscheibe derart ausgebildet ist, dass die Haltevorrichtung vollständig geöffnet wird, nachdem das Trennmesser den Querschnitt des Werkstücks verlassen hat, insbesondere in seiner Ausgangsposition ist. Durch eine derartige Ausgestaltung der Exzenterscheibe wird sichergestellt, dass das Trennmesser bei seiner Rückstellbewegung das Werkstück nicht aus der Haltevorrichtung stoßen kann, da die Haltevorrichtung erst vollständig geöffnet wird, nachdem das Trennmesser den Querschnitt des Werkstücks verlassen hat, so dass eine Berührung des Trennmessers und des Werkstücks nicht mehr erfolgen kann. Insbesondere ist dies der Fall, wenn die Haltevorrichtung erst vollständig geöffnet wird, nachdem das Trennmesser wieder in seiner Ausgangsposition ist.

Im Einzelnen gibt es nun eine Vielzahl von Möglichkeiten, das erfindungsgemäße Verfahren und die Trennvorrichtung auszugestalten und weiterzubilden.

Dazu verwiesen sowohl auf die den Patentansprüchen 1 und 8 nachgeordneten Patentansprüche als auch auf die Beschreibung von bevorzugten Ausführüngsbeispielen in Verbindung mit der Zeichnung. In der Zeichnung zeigen
- Fig. 1: ein schematisches Ablaufdiagramm eines Ausführungsbeispiels eines Verfahrens,
- Fig. 2: ein schematisches Ablaufdiagramm eines zweiten Ausführungsbeispiels eines Verfahrens,
- Fig. 3: ein schematisches Ablaufdiagramm eines dritten Ausführungsbeispiels eines Verfahrens,
- Fig. 4: ein Ausführungsbeispiel einer Trennvorrichtung in Seitenansicht, und
- Fig. 5: einen vergrößerten Ausschnitt der Trennvorrichtung gemäß Fig. 4.

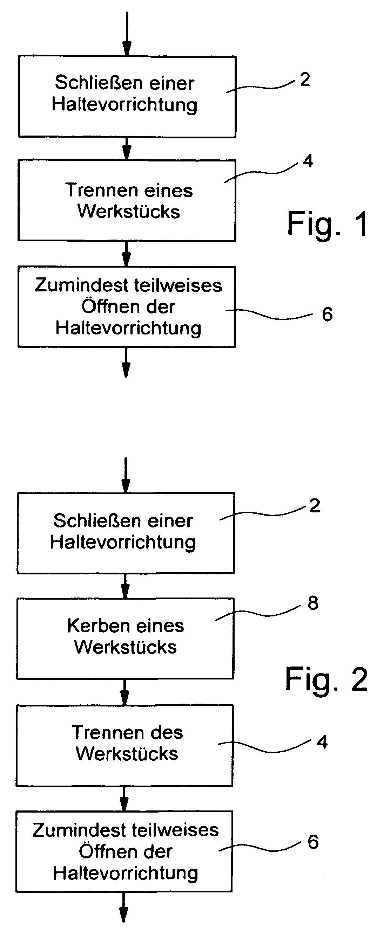

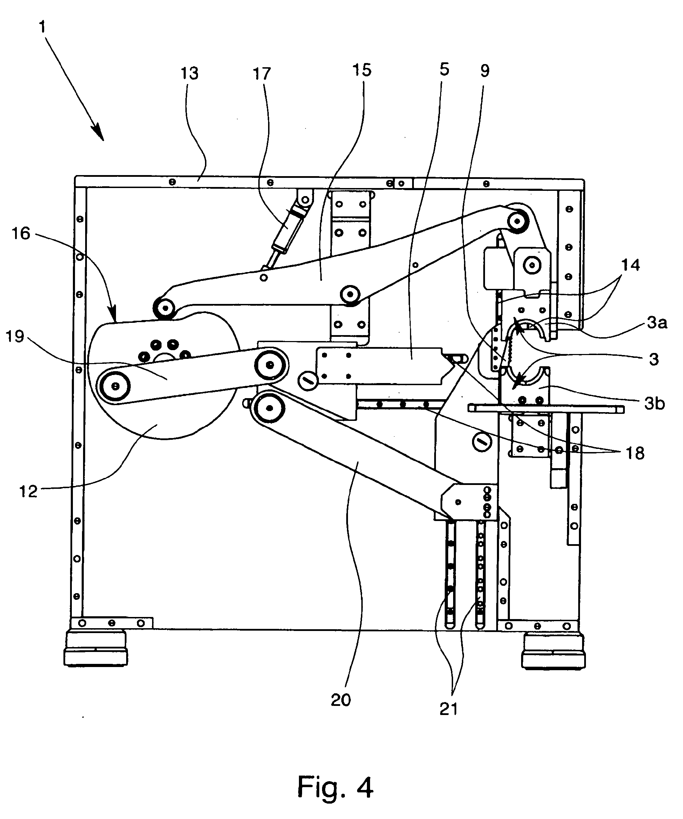

Fig. 1 zeigt ein schematisches Ablaufdiagramm eines Ausführungsbeispiels eines Verfahrens zum Betrieb einer - in Fig. 4 dargestellten - Trennvorrichtung 1 zum Trennen 4 eines - nicht dargestellten - Werkstücks. Gemäß dem Verfahren erfolgt nach dem Einlegen des zu trennenden Werkstücks in die Trennvorrichtung 1 innerhalb eines Trennzyklus zunächst das Schließen 2 einer - in Fig. 4 dargestellten - Haltevorrichtung 3 zum Halten des zu trennenden Werkstücks. Nachdem das zu trennende Werkstück von der Haltevorrichtung 3 gehalten wird, erfolgt das Trennen 4 des Werkstücks durch Verfahren eines - in Fig. 4 dargestellten - Trennmessers 5 aus einer Ausgangsposition durch den Querschnitt des Werkstücks in eine Trennposition. Nachfolgend erfolgt ein teilweises Öffnen 6 der Haltevorrichtung 3 während sich das Trennmesser 5 zumindest teilweise im Querschnitt des Werkstücks befindet. Dadurch ist gewährleistet, dass das Werkstück nach dem Trennen 4 spannungsfrei ist, und dass das Trennmesser 5, nachdem es das Werkstück getrennt hat, vorzugsweise einen Abstand zum Werkstück aufweist.

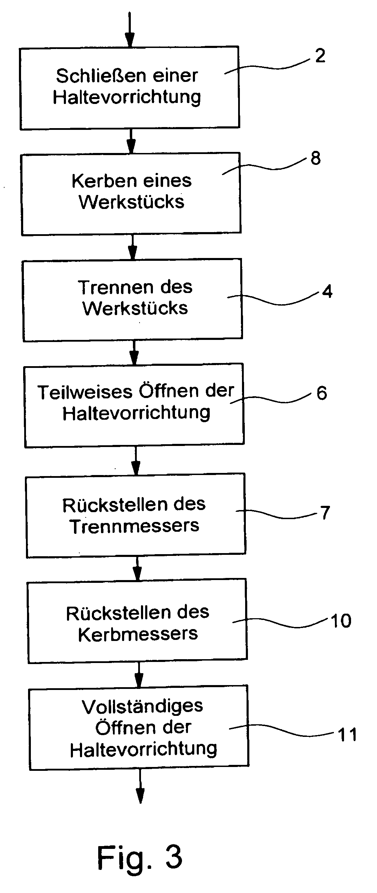

Fig. 3 zeigt ein weiteres schematisches Ablaufdiagramm eines Ausführungsbeispiels eines Verfahrens zum Betrieb einer Trennvorrichtung 1 zum Trennen 4 eines Werkstücks, bei dein nach dem Trennen 4 ein teilweises Öffnen 6 der Haltevorrichtung 3 vor dem Rückstellen 7 des Trennmessers 5 aus der Trennposition in die Ausgangsposition erfolgt. Zu Beginn des Trennzyklus erfolgt zunächst ein Schließen 2 der Haltevorrichtung 3, um das zu trennende Werkstück zu halten. Nachdem das Werkstück in der Haltevorrichtung 3 gehalten ist, erfolgt ein Kerben 8 des Werkstücks mit einem - in Fig. 4 dargestellten - Kerbmesser 9, indem das Kerbmesser 9 aus einer Ausgangsposition in eine Kerbposition verfahren wird. Das Kerbmesser 9 verursacht eine Kerbe in der Oberfläche des Werkstücks, wobei das Trennmesser 5 bei dem nachfolgenden Trennen 4 des Werkstücks in diese Kerbe hineinritt und das Werkstück abtrennt. Das Trennmesser 5 und das Kerbmesser 9 sind in einer Ebene geführt.

Das Trennmesser 5 wird zum Trennen 4 aus der Ausgangsposition durch den Querschnitt des Werkstücks in eine Trennposition verfahren. Während des Trennens 4 wird das Material des Werkstücks durch die Schneidklingen des Trennmessers 5 abgeschert, wobei das Trennmesser 5 in der Trennposition den gesamten Querschnitt des Werkstücks durchtrennt hat. Nach dem Trennen 4 des Werkstücks erfolgt ein teilweises Öffnen 6 der Haltevorrichtung 3, wodurch Spannungen abgebaut werden und das Werkstück mit Spiel in der Haltevorrichtung 3 gehalten ist. Anschließend erfolgt ein Rückstellen 7 des Trennmessers 5, wobei das Trennmesser 5 aufgrund der teilweise geöffneten Haltevorrichtung 3 nahezu verschleißfrei an dem abgetrennten Werkstück vorbeigeführt werden kann. Nachdem das Trennmesser 5 - während des Rückstellens 7 - den Querschnitt des Werkstücks verlassen hat, erfolgt ein Rückstellen 10 des Kerbmessers 9 aus der Kerbposition in die Ausgangsposition. Abschließend erfolgt ein vollständiges Öffnen 11 der Haltevorrichtung 3, wodurch das Werkstück neu positioniert und erneut getrennt werden oder ein neues Werkstück in die Trennvorrichtung 1 eingelegt werden kann. Das Rückstellen 7 des Trennmessers 5 und das Rückstellen 10 des Kerbmessers 9 erfolgt zumindest teilweise zeitgleich, so dass der Trennzyklus zeitoptimiert ist. Das vollständige Öffnen 11 der Haltevorrichtung 3 erfolgt nachdem das Kerbmesser 9 und das Trennmesser 5 jeweils - durch das Rückstellen 7, 10 - den Querschnitt des Werkstücks verlassen haben. Abschließend ist der Trennzyklus beendet.

Fig. 2 zeigt ein schematisches Ablaufdiagramm eines Ausführungsbeispiels eines Verfahrens zum Trennen 4 eines Werkstücks. Zunächst erfolgt zu Beginn eines Trennzyklus ein Schließen 2 der Haltevorrichtung 3, wobei nachfolgend ein Kerben 8 des Werkstücks mit einem Kerbmesser 9 erfolgt. Nachfolgend tritt das Trennmesser 5 zum Trennen 4 des Werkstücks in die mittels des Kerbmessers 9 erzeugte Kerbe in den Querschnitt des Werkstücks ein und trennt dieses nachfolgend. Nach dem Trennen 4, zeitgleich mit dem Beginn des Rückstellens 7 des Trennmessers 5 aus der Trennposition in die Ausgangsposition, erfolgt ein teilweises Öffnen 6 der Haltevorrichtung 3, so dass das Rückstellen 7 des Trennmessers 5 verschleißreduziert dadurch erfolgt, dass das Trennmesser 5 an dem mit Spiel in der Haltevorrichtung 3 gehaltenen Werkstück vorbeigeführt wird.

Fig. 4 zeigt eine Trennvorrichtung 1 zum Trennen 4 eines - nicht dargestellten - Werkstücks. Die Trennvorrichtung 1 umfasst eine Haltevorrichtung 3 für ein Werkstück und ein Trennmesser 5, wobei das Trennmesser 5 mindestens zwischen einer Ausgangsposition und einer Trennposition verfahrbar ist. Fig. 4 zeigt das Trennmesser 5 in seiner Ausgangsposition. Die Bewegungen der Haltevorrichtung 3, die bei diesem Ausführungsbeispiel eine erste Haltebacke 3a und eine zweite Haltebacke 3b umfasst, des Trennmessers 5 und des Kerbmessers 9 sind über eine drehbar gelagerte Exzenterscheibe 12 synchronisiert. Die Bauelemente der Trennvorrichtung 1 sind innerhalb eines stützenden Gehäuses 13 angeordnet. Die Exzenterscheibe 12 wird über einen - nicht dargestellten - Elektromotor in eine Drehbewegung versetzt, wodurch die Haltevorrichtung 3, das Trennmesser 5 und das Kerbmesser 9 in entsprechende Bewegungen versetzt werden.

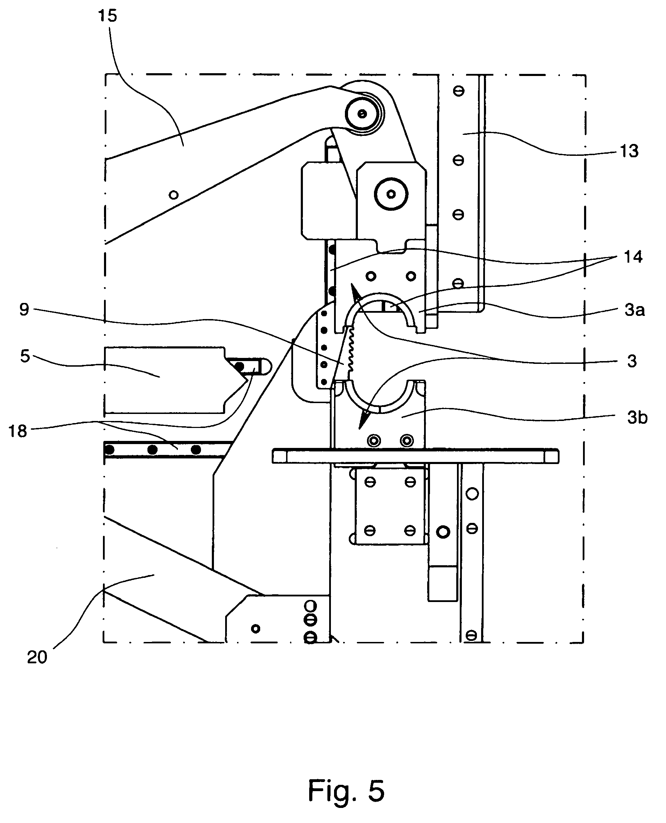

Das Umfeld der Haltevorrichtung 3 der Trennvorrichtung 1 gemäß Fig. 4 ist in Fig. 5 in vergrößerter Ansicht dargestellt. Die in Fig. 4 und Fig. 5 unterhalb dargestellte zweite Haltebacke 3b der Haltevorrichtung 3 ist stationär angeordnet und lässt sich nicht bewegen. Die in Fig. 4 und Fig. 5 oberhalb angeordnete erste Haltebacke 3a der Haltevorrichtung 3 ist auf einem Paar erster Führungsschienen 14 translatorisch bewegbar gehalten, wobei die Bewegung der Haltevorrichtung 3 durch einen ersten Steuerstab 15 ausgeführt wird. Die Bewegung des Steuerstabs 15 wird durch die Außenkontur 16 der Exzenterscheibe 12 gesteuert. Eine Gasdruckfeder 17 sorgt dafür, dass der erste Steuerstab 15 stets der Außenkontur 16 der Exzenterscheibe 12 folgt. Der erste Steuerstab 15 ist mittig an dem Gehäuse 13 gelagert.

Das Trennmesser 5 ist auf einem Paar zweiter Führungsschienen 18 derart gehalten, dass es translatorisch auf die Haltevorrichtung 3 und damit auf ein in der Haltevorrichtung 3 gehaltenes Werkstück zu bewegbar ist. Die Bewegung des Trennmessers 5 wird durch einen zweiten Steuerstab 19 hervorgerufen, der an der Exzenterscheibe 12 befestigt ist. Die Bewegung des Trennmessers 5 ist durch einen dritten Steuerstab 20 unmittelbar an die Bewegungen des Kerbmessers 9 gekoppelt, das auf einem Paar dritter Führungsschienen 21 translatorisch bewegbar geführt ist. Wird nun das Trennmesser 5 durch den zweiten Steuerstab 19 und damit durch die Exzenterscheibe 12 auf die Haltevorrichtung 3 zu bewegt, erfolgt - gesteuert durch den dritten Steuerstab 20 - zunächst eine Abwärtsbewegung des Kerbmessers 9, wodurch im Werkstück eine seitliche Kerbe entsteht, die nachfolgend als Zugang für das Trennmesser 5 in den Querschnitt des Werkstücks dient.

Die Außenkontur 16 der Exzenterscheibe 12 ist gemäß Fig. 4 und Fig. 5 derart ausgebildet, dass das teilweise Öffnen 6 der Haltevorrichtung 3 zeitgleich mit dem Beginn des Rückstellens 7 des Trennmessers 5 aus der Trennposition in die Ausgangsposition erfolgt. Dadurch, dass das Rückstellen 7 des Trennmessers 5 aus der Trennposition in die Ausgangsposition bei teilweise geöffneter Haltevorrichtung 3 erfolgt, liegen zwischen dem Werkstück und dem Trennmesser 5 keine Spannungen an und der Kontakt ist minimiert, wodurch der Verschleiß des Trennmessers 5 reduziert ist.

Das teilweise Öffnen 6 der Haltevorrichtung 3 erfolgt dadurch, dass die erste Haltebacke 3a mittels des ersten Steuerstabes 15 - und damit mittels der Exzenterscheibe 12 - geringfügig angehoben wird, so dass ein Spalt von etwa 1 mm Breite zwischen dem Werkstück und der ersten Haltebacke 3a entsteht. Dabei liegt das Werkstück in der zweiten Haltebacke 3b auf. Mit dem Beginn der Abwärtsbewegung der ersten Haltebacke 3a - zu Beginn eines Trennzyklus - erfolgt auch eine Bewegung des Trennmessers 5 und auch des Kerbmessers 9, wobei das Kerbmessers 9 das Werkstück erst nach dem vollständigen Schließen 2 der Haltevorrichtung 3 einkerbt. Nachdem sich das Kerbmesser 9 nach dem Kerben 8 unterhalb des Querschnitts des Werkstücks befindet, tritt unmittelbar das Trennmesser 5 zum Trennen 4 in die Kerbe des Werkstücks ein. Die Trennposition des Trennmessers 5 ist erreicht, wenn der gesamte Querschnitt des Werkstücks durch das Trennmesser 5 durchtrennt ist. Zeitgleich mit dem Beginn des Rückstellens 7 des Trennmessers 5 erfolgt ein teilweises Öffnen 6 der Haltevorrichtung 3, wodurch der Verschleiß des Trennmessers 5 reduziert wird.

## Patentansprüche

1. Verfahren zum Betrieb einer Trennvorrichtung (1), mit einem Trennzyklus umfassend mindestens folgende Verfahrensschritte:
- Schließen (2) einer Haltevorrichtung (3) zum Halten eines zu trennenden Werkstücks,
- Trennen (4) des Werkstücks durch Verfahren eines Trennmessers (5) aus einer Ausgangsposition durch den Querschnitt des Werkstücks in eine Trennposition,
**dadurch gekennzeichnet,**
**dass** ein zumindest teilweises Öffnen (6) der Haltevorrichtung (3) erfolgt, während sich das Trennmesser (5) zumindest teilweise im Querschnitts des Werkstücks befindet.

2. Verfahren zum Betrieb einer Trennvorrichtung (1) nach Anspruch 1, **dadurch gekennzeichnet, dass** das zumindest teilweise Öffnen (6) der Haltevorrichtung (3) bevor oder während des Rückstellens (7) des Trennmessers (5) aus der Trennposition in die Ausgangsposition erfolgt.

3. Verfahren zum Betrieb einer Trennvorrichtung (1) nach Anspruch 1 oder 2, **dadurch gekennzeichnet, dass** nach dem Schließen (2) der Haltevorrichtung (3) und vor dem Trennen (4) des Werkstücks ein Kerben (8) des Werkstücks mit einem Kerbmesser (9) erfolgt, indem das Kerbmesser (9) aus einer Ausgangsposition in eine Kerbposition verfahren wird.

4. Verfahren zum Betrieb einer Trennvorrichtung (1) nach Anspruch 3, **dadurch gekennzeichnet, dass** ein Rückstellen (10) des Kerbmessers (9) aus der Kerbposition in die Ausgangsposition erst nach dem Trennen (4) des Werkstücks erfolgt.

5. Verfahren zum Betrieb einer Trennvorrichtung (1) nach Anspruch 3 oder 4, **dadurch gekennzeichnet, dass** das Rückstellen (7) des Trennmessers (5) und das Rückstellen (10) des Kerbmessers (9) zumindest teilweise zeitgleich erfolgt.

6. Verfahren zum Betrieb einer Trennvorrichtung (1) nach einem der Ansprüche 1 bis 5, **dadurch gekennzeichnet**, das ein vollständiges Öffnen (11) der Haltevorrichtung (3) erfolgt, nachdem das Trennmesser (5) den Querschnitt des Werkstücks verlassen hat, insbesondere nachdem mindestens das Trennmesser (5) wieder in der Ausgangsposition ist.

7. Verfahren zum Betrieb einer Trennvorrichtung (1) nach einem der Ansprüche 1 bis 6, **dadurch gekennzeichnet, dass** das zumindest teilweise Öffnen (6) der Haltevorrichtung (3) derart erfolgt, dass ein Spalt mit einer Breite zwischen 0,5 mm und 2,5 mm zwischen Werkstück und Haltevorrichtung (3) entsteht, insbesondere ein Spalt mit einer Breite von 1 mm.

8. Trennvorrichtung (1) zum Trennen (4) eines Werkstücks, umfassend eine Haltevorrichtung (3) für ein Werkstück und ein Trennmesser (5), wobei das Trennmesser (5) mindestens zwischen einer Ausgangsposition und einer Trennposition verfahrbar ist,
**dadurch gekennzeichnet,**
**dass** die Trennvorrichtung (1) derart eingerichtet ist, dass ein Verfahren nach einem der Ansprüche 1 bis 7 durchführbar ist.

9. Trennvorrichtung (1) nach Anspruch 8, **dadurch gekennzeichnet, dass** die Bewegung der Haltevorrichtung (3) und des Trennmessers (5) über eine drehbar gelagerte Exzenterscheibe (12) synchronisiert ist.

10. Trennvorrichtung (1) nach Anspruch 9, **dadurch gekennzeichnet, dass** ein Kerbmesser (9) vorhanden ist, dass das Kerbmesser (9) zwischen einer Ausgangsposition und einer Kerbposition verfahrbar ist, insbesondere dass die Bewegung des Kerbmessers (9) über die Exzenterscheibe (12) mit der Bewegung der Haltevorrichtung (3) und des Trennmessers (5) synchronisiert ist.

11. Trennvorrichtung (1) nach Anspruch 10, **dadurch gekennzeichnet, dass** die Exzenterscheibe (12) derart ausgebildet ist, dass das Kerbmesser (9) in die Ausgangsposition zurückgefahren wird, nachdem das Trennmesser (5) in der Ausgangsposition ist.

12. Trennvorrichtung (1) nach einem der Ansprüche 9 bis 11, **dadurch gekennzeichnet, dass** die Exzenterscheibe (12) derart ausgebildet ist, dass ein zumindest teilweises Öffnen (6) der Haltevorrichtung (3) erfolgt, während das Trennmesser (5) im Bereich des Querschnitts des Werkstücks ist.

13. Trennvorrichtung (1) nach einem der Ansprüche 9 bis 12, **dadurch gekennzeichnet, dass** die Exzenterscheibe (12) derart ausgebildet ist, dass ein zumindest teilweises Öffnen (6) der Haltevorrichtung (3) bevor oder während des Rückstellens (7) des Trennmessers (5) aus der Trennposition in die Ausgangsposition erfolgt.

14. Trennvorrichtung (1) nach einem der Ansprüche 9 bis 13, **dadurch gekennzeichnet, dass** die Bewegung der Haltevorrichtung (3) durch die Form der Außenkontur (16) der Exzenterscheibe (12) gesteuert wird.

15. Trennvorrichtung (1) nach einem der Ansprüche 9 bis 14, **dadurch gekennzeichnet, dass** die Exzenterscheibe (12) derart ausgebildet ist, dass die Haltevorrichtung (3) vollständig geöffnet wird, nachdem das Trennmesser (5) den Querschnitt des Werkstücks verlassen hat, insbesondere in seiner Ausgangsposition ist.

## Claims

1. Method for operating a separating device (1) having a separating cycle consisting of at least the following method steps:
- closing (2) a holding device (3) for holding a workpiece to be separated,
- separating (4) the workpiece by moving a cutting knife (5) from a start positing through the cross section of the workpiece into a separating position
**characterized in,**
**that** at least a partial opening (6) of the holding device (3) takes place while the cutting knife (5) is located at least partially in the cross section of the workpiece.

2. Method for operating a separating device (1) according to claim 1, **characterized in that** at least partial opening (6) of the holding device (3) takes place before or during resetting (7) the cutting knife (5) from the separating position back into the starting position.

3. Method for operating a separating device (1) according to claim 1 or 2, **characterized in that** after closing (2) the holding device (3) and before separating (4) the workpiece, a notch (8) is made in the workpiece with a notcher (9), **in that** the notcher (9) is moved from a starting positing into a notching position.

4. Method for operating a separating device (1) according to claim 3, **characterized in that** resetting (10) the notcher (9) from the notching position back into the starting positing takes place after separating (4).

5. Method for operating a separating device (1) according to claim 3, **characterized in that** the resetting (7) of the cutting knife (5) and the resetting (10) of the notcher (9) take place at least partially simultaneously.

6. Method for operating a separating device (1) according to any one of claims 1 to 5, **characterized in that** a complete opening (11) of the holding device (3) takes place after the cutting knife (5) has left the cross section of the workpiece, in particular after at least the cutting knife (5) has returned to its starting position.

7. Method for operating a separating device (1) according to any one of claims 1 to 6, **characterized in that** the at least partial opening (6) of the holding device (3) takes place so that a gap with a width between 0,5 mm and 2,5 mm is created between workpiece and holding device (3), in particular a gap having a width of 1 mm.

8. Separating device (1) for separating (4) a workpiece comprising a holding device (3) for a workpiece and a cutting knife (5), wherein the cutting knife (5) can be moved at least between a starting position and a separating position,
**characterized in**
**that** the separating device (1) is designed so that a method can be carried out according to any one of claims 1 to 7.

9. Separating device (1) according to claim 8, **characterized in that** the movement of the holding device (3) and the cutting knife (5) is synchronized via a pivoted eccentric sheave (12).

10. Separating device (1) according to claim 9, **characterized in that** a notcher (9) is provided, that the notcher (9) can be moved between a starting positing and a notching position, in particular that the movement of the of the notcher (9) is synchronized with the movement of the holding device (3) and the cutting knife (5) via the eccentric sheave (12).

11. Separating device (1) according to claim 10, **characterized in that** the eccentric sheave (12) is designed so that the notcher (9) is reset to the starting position after the cutting knife (5) is in the starting position.

12. Separating device (1) according to any one of claim 9 to 11, **characterized in that** the eccentric sheave (12) is designed so that an at least partial opening (6) of the holding device (3) takes place while the cutting knife (5) is in the area of the cross section of the workpiece.

13. Separating device (1) according to any one of claims 9 to 12, **characterized in that** the eccentric sheave (12) is designed so that an at least partial opening (6) of the holding device (3) takes place before or during resetting (7) of the cutting knife (5) from the separating position into the starting position.

14. Separating device (1) according to any one of claims 9 to 13, **characterized in that** the movement of the holding device (3) is steered by the form of the outer contour (16) of the eccentric sheave (12).

15. Separating device (1) according to any one of claims 9 to 14, **characterized in that** the eccentric sheave (12) is designed so that the holding device (3) is completely opened after the separating knife (5) has left the cross section of the workpiece, in particular is in its starting position.

## Revendications

1. Procédé pour le fonctionnement d'un dispositif de séparation (1), comprenant un cycle de séparation comprenant au moins les étapes de procédé suivantes :
- fermeture (2) d'un dispositif de fixation (3) pour fixer une pièce à séparer,
- séparation (4) de la pièce par déplacement d'un couteau de séparation (5) d'une position de départ à travers la section de la pièce dans une position de séparation,
**caractérisé en ce**
**qu'**une ouverture au moins partielle (6) du dispositif de fixation (3) a lieu pendant que le couteau de séparation (5) se trouve au moins en partie dans la section de la pièce.

2. Procédé pour le fonctionnement d'un dispositif de séparation (1) selon la revendication 1, **caractérisé en ce que** l'ouverture au moins partielle (6) du dispositif de fixation (3) s'effectue avant ou pendant le rappel (7) du couteau de séparation (5) de la position de séparation dans la position de départ.

3. Procédé pour le fonctionnement d'un dispositif de séparation (1) selon la revendication 1 ou 2, **caractérisé en ce qu'**après la fermeture (2) du dispositif de fixation (3) et avant la séparation (4) de la pièce, un encochage (8) de la pièce avec un couteau d'encochage (9) a lieu en déplaçant le couteau d'encochage (9) d'une position de départ dans une position d'encochage.

4. Procédé pour le fonctionnement d'un dispositif de séparation (1) selon la revendication 3, **caractérisé en ce qu'**un rappel (10) du couteau d'encochage (9) de la position d'encochage dans la position de départ a lieu seulement après la séparation (4) de la pièce.

5. Procédé pour le fonctionnement d'un dispositif de séparation (1) selon la revendication 3 ou 4, **caractérisé en ce que** le rappel (7) du couteau de séparation (5) et le rappel (10) du couteau d'encochage (9) s'effectuent au moins en partie en même temps.

6. Procédé pour le fonctionnement d'un dispositif de séparation (1) selon l'une quelconque des revendications 1 à 5, **caractérisé en ce qu'**une ouverture complète (11) du dispositif de fixation (3) a lieu après que le couteau de séparation (5) a quitté la section de la pièce, en particulier après qu'au moins le couteau de séparation (5) est à nouveau dans la position de départ.

7. Procédé pour le fonctionnement d'un dispositif de séparation (1) selon l'une quelconque des revendications 1 à 6, **caractérisé en ce que** l'ouverture au moins partielle (6) du dispositif de fixation (3) s'effectue de telle sorte qu'il se forme une fente d'une largeur comprise entre 0,5 mm et 2,5 mm entre la pièce et le dispositif de fixation (3), en particulier une fente d'une largeur de 1 mm.

8. Dispositif de séparation (1) pour séparer (4) une pièce, comprenant un dispositif de fixation (3) pour une pièce et un couteau de séparation (5), le couteau de séparation (5) pouvant être déplacé au moins entre une position de départ et une position de séparation,
**caractérisé en ce que**
le dispositif de séparation (1) est prévu de telle sorte qu'un procédé selon l'une quelconque des revendications 1 à 7 puisse être mis en oeuvre.

9. Dispositif de séparation (1) selon la revendication 8, **caractérisé en ce que** le déplacement du dispositif de fixation (3) et du couteau de séparation (5) est synchronisé par le biais d'un disque excentrique (12) supporté à rotation.

10. Dispositif de séparation (1) selon la revendication 9, **caractérisé en ce qu'**un couteau d'encochage (9) est prévu, **en ce que** le couteau d'encochage (9) peut être déplacé entre une position de départ et une position d'encochage, en particulier **en ce que** le déplacement du couteau d'encochage (9) est synchronisé par le biais du disque excentrique (12) avec le déplacement du dispositif de fixation (3) et du couteau de séparation (5).

11. Dispositif de séparation (1) selon la revendication 10, **caractérisé en ce que** le disque excentrique (12) est réalisé de telle sorte que le couteau d'encochage (9) soit ramené dans la position de départ après que le couteau de séparation (5) est revenu dans la position de départ.

12. Dispositif de séparation (1) selon l'une quelconque des revendications 9 à 11, **caractérisé en ce que** le disque excentrique (12) est réalisé de telle sorte qu'une ouverture au moins partielle (6) du dispositif de fixation (3) se produise pendant que le couteau de séparation (5) est dans la région de la section de la pièce.

13. Dispositif de séparation (1) selon l'une quelconque des revendications 9 à 12, **caractérisé en ce que** le disque excentrique (12) est réalisé de telle sorte qu'une ouverture au moins partielle (6) du dispositif de fixation (3) se produise avant ou pendant le rappel (7) du couteau de séparation (5) de la position de séparation dans la position de départ.

14. Dispositif de séparation (1) selon l'une quelconque des revendications 9 à 13, **caractérisé en ce que** le déplacement du dispositif de fixation (3) est commandé par la forme du contour extérieur (16) du disque excentrique (12).

15. Dispositif de séparation (1) selon l'une quelconque des revendications 9 à 14, **caractérisé en ce que** le disque excentrique (12) est réalisé de telle sorte que le dispositif de fixation (3) soit complètement ouvert après que le couteau de séparation (5) a quitté la section de la pièce, en particulier est revenu dans sa position de départ.
